# EUROPEAN PATENT SPECIFICATION

(11) **EP 3 606 808 B1**
(45) Date of publication and mention of the grant of the patent: **10.05.2023**
(21) Application number: 18780434.9
(22) Date of filing: 05.04.2018
(51) Int. Cl.: B62J 17/02, F01P 11/10, F01P 5/06

(54) **AN AIR DEFLECTING STRUCTURE FOR A TWO WHEELED VEHICLE**
LUFTABLENKSTRUKTUR FÜR EIN ZWEIRADFAHRZEUG
STRUCTURE DE DÉVIATION D'AIR POUR UN VÉHICULE À DEUX ROUES

(30) Priority: 05.04.2017 IN 201741012189
(43) Date of publication of application: 12.02.2020
(73) Proprietor: TVS Motor Company Limited, Chennai 600006 (IN)
(72) Inventor: NANDA KISHOR BANDARU, Siva Rama, Chennai 600 006 (IN); BABU PANNEER, Suresh, Chennai 600 006 (IN); VASUDEVA MURTHY, Thejasvi, Chennai 600 006 (IN); SIVAKUMAR, Arumugam, Chennai 600 006 (IN); GARG, Manish, Chennai 600 006 (IN)
(74) Representative: Patentanwaltskanzlei Matschnig & Forsthuber OG
(86) International application number: PCT/IB2018/052346
(87) International publication number: WO 2018/185689

(56) References cited:
- WO-A2-2012/038970
- US-A- 6 105 701
- US-A1- 2008 108 032
- US-A1- 2009 008 182
- US-A1- 2013 168 039
- US-B2- 6 854 542

## Description

### FIELD OF INVENTION

The present subject matter relates generally to a two wheeled vehicle. More particularly, the present subject matter relates to an air deflecting structure employed to direct hot air from a radiator mounted on a front portion of the two wheeled vehicle.

### BACKGROUND

During operation of the IC engine, the burning of fuel and air occurs inside an internal combustion (IC) engine generating mechanical energy which provides motive force for movement of a two wheeled vehicle. But, this operation generates lot of thermal energy in and around the IC engine which must be extracted out of the IC engine. Hence, it is necessary to cool the IC engine, and many two wheeled vehicles employ liquid cooling systems to cool the IC engine. In liquid cooling systems, a coolant is pumped under pressure and circulates to critical hot zones of the IC engine in passages. This helps extract heat from various parts of the IC engine and maintains an optimum operating temperature for the IC engine to operate. A radiator is usually employed in such liquid cooling systems which form a heat exchanger wherein the hot coolant is cooled and the cooled coolant is circulated back for the next cycle. Within the radiator, the coolant is made to pass through long circuitous passages and constant flow of air is passed through its core to extract the heat. The flow of air is obtained when the two wheeled vehicle is moving by taking advantage of the impinging air flow from a front direction and assisted by a radiator fan which helps to draw in the air and direct the hot air out of the radiator after circulation. Generally, in two wheeled vehicles the radiator is disposed towards the front of the two wheeled vehicle to take advantage of the incoming air from the front during motion. Further, with a view to incorporate look, and aesthetic value to the two wheeled vehicle large side panels enclose the two sides of the two wheeled vehicle in order to give a sporty look. The side panels enclose the radiator and form a substantial central region on the front to permit ingress of air and exits on either side behind on the rear of the side panels to permit hot air exit after passing through the radiator. During straddling by a rider the hot air impinges the leg of the rider and this may cause discomfort to the rider. This is also dangerous from the safety point of view as the temperatures of the hot air are elevated and in addition to causing discomfort to the rider can cause injuries to the leg. Further, the hot air can come in contact with various parts of the IC engine and thus transfer some heat back to the IC engine. Hence, in order to eliminate this drawback, the present subject matter proposes an air deflecting structure configured to direct hot air away from the leg of the rider and the IC engine.

### BRIEF DESCRIPTION OF THE DRAWINGS

The detailed description is described with reference to the accompanying figures. The same numbers are used throughout the drawings to reference like features and components.
**Fig. 1****.** illustrates the side view of a two wheeled vehicle employing an embodiment of the present subject matter.
**Fig. 2****.** illustrates the isometric view of the two wheeled vehicle after the side panel and other style parts are removed according to the embodiment of present subject matter.
**Fig. 3a****.** illustrates the isometric view an internal combustion (IC) engine along with an air deflecting structure mounted on it according to the embodiment of present subject matter.
**Fig. 3b****.** illustrates the isometric view of the IC engine showing the brackets for mounting the air deflecting structure according to the embodiment of the present subject matter.
**Fig. 3c****.** illustrates the exploded view of the air deflecting structure mounted on the IC engine according to the embodiment of the present subject matter.
**Fig. 4a****. and** **Fig. 4b****.** illustrates the isometric view and the front view of the air deflecting structure guard according to the embodiment of the present subject matter.
**Fig. 5a, Fig. 5b. and Fig. 5c****.** illustrates the front view, the side view, and the isometric view of the bottom fairing according to the embodiment of the present subject matter.
**Fig. 6a****.** illustrates the two wheeled vehicle with air flow distribution indicating a prior art.
**Fig. 6b****.** illustrates the two wheeled vehicle with the air deflecting structure illustrating the air flow distribution according to the embodiment of the present subject matter.

### DETAILED DESCRIPTION

Various features and embodiments of the present subject matter here will be discernible from the following further description thereof, set out hereunder. According to an embodiment, the two wheeled vehicle described here relates to a straddle type two wheeled vehicle colloquially called a motorcycle wherein a rider has to straddle and sit. An air deflecting structure is mounted on the front portion behind the radiator. It is contemplated that the concepts of the present subject matter may be applied to other types of vehicles such as a two wheeled scooter type vehicles within the spirit and scope of this invention. Further "front" and "rear", and "left" and "right" referred to in the ensuing description of the illustrated embodiment refer to front and rear, and left and right directions as seen from a rear portion of the two wheeled vehicle and looking forward. Furthermore, a longitudinal axis unless otherwise mentioned, refers to a front to rear axis relative to the engine, while a lateral axis unless otherwise mentioned, refers generally to a side to side, or left to right axis relative to the engine. The detailed explanation of the constitution of parts other than the present subject matter which constitutes an essential part has been omitted at suitable places.

The IC engine comprises of a cylinder head, a reciprocating piston inside a cylinder block located below the cylinder head, a rotatable crankshaft to transfer mechanical energy to the transmission system and a connecting rod transferring energy imparted to the reciprocating piston to the rotatable crankshaft. During operation of the IC engine, the burning of air fuel mixture occurs in a combustion chamber interposed between the cylinder head and cylinder block. This operation generates lot of thermal energy in and around the cylinder head and cylinder block. This thermal energy increases the temperature of the cylinder block, the cylinder head and the atmospheric air surrounding it. The temperatures around it can reach very high values and sometimes exceed the melting point of common metal alloys used to make cylinder blocks and cylinder heads. Therefore, if this thermal energy is not dissipated, it may result in cylinder block! cylinder head failure. Also, large temperature differences may lead to a distortion of the IC engine components due to the thermal stresses which are set up. This makes it necessary for variation in temperatures to be reduced. It is also seen that higher temperatures results in lower volumetric efficiency of the IC engine. Hence, it is necessary to cool the cylinder block, the cylinder head, its associated components and the surrounding air through a cooling system.

In many IC engines, liquid cooling system is used wherein a coolant is circulated throughout the IC engine critical hot zones such as cylinder head and cylinder block. The coolant extracts the heat and is then transferred to the radiator in which heat exchange is conducted between the heated coolant and flowing air. The heat exchanger is conducted in a member called a radiator. Within the radiator, the coolant is made to pass through long circuitous passages and constant flow of air is passed through its core to extract the heat. The flow of air is obtained when the two wheeled vehicle is moving by taking advantage of the impinging air flow from a front direction and assisted by a radiator fan which helps draws in the air through the radiator after circulation. The radiator fan is either operated by obtaining drive from the IC engine or can be operated by a central electric hub motor. A centrifugal pump driven by the IC engine and disposed on an engine crankcase pumps the coolant under pressure throughout the cooling passages around the cylinder block and cylinder head including around the combustion chamber and inside the radiator passages. The radiator comprises secondary heat transfer surfaces spaced alternately with the circuitous passages such as corrugated structures or small fins projecting outwards through which air is flown through the radiator core. A coolant tank is disposed close to the radiator wherein the coolant is stored. Various tubes and hoses connect the different components such as the radiator to the IC engine.

In some two wheeled vehicles, such as a straddle-type vehicle (also called as a motorcycle) the IC engine is mounted forwardly below a frame assembly. Since the IC engine in the motorcycle is mounted forwardly, it typically has some end-transmission means such as a chain drive and sprocket to transfer the driving force of the IC engine to the rear wheel of the two wheeled vehicle. Such two wheeled vehicles can have two side panels placed on either side of the frame assembly surrounding the IC engine to make the vehicle more attractive and provide a sporty look. The side panel is also aerodynamically designed to reduce resistance offered by the flowing air during vehicle running. The motorcycle also has a front suspension system comprising two telescopic front forks extending from a handlebar till a front wheel. A visor assembly is disposed below the handlebar. The front wheel is covered by a front fender. The side panels on either side extend from the handlebar till the IC engine and hence, permit air from a gap between the visor assembly and the front fender between the two telescopic front forks. However, such side panels may have a detrimental effect on cooling, to both to the IC engine and to other components. The area around the cylinder head and cylinder block of such IC engines are enclosed and are heated up during their operation. Since, proper air circulation is lacking around the enclosed cylinder block and cylinder head, such IC engines are typically cooled by liquid cooling systems by circulating coolant around the critical hot zones of the IC engine.

Generally, the radiator fans are situated between the radiator and the IC engine. As highlighted, the radiator fans can be driven by the 1C engine or electrically. The radiator fans pull the air, drawing it over the radiator. After air circulation around the radiator core, the hot air is directed downstream of the radiator fan in straight horizontal paths. In two wheeled vehicles comprising side panels on both sides, the radiator and the radiator fan are enclosed within the side panels. The radiator is mounted in front of the 1C engine just above the front fender and behind the front suspension system. Then, on operation of the radiator fan, the air is drawn from a gap between the visor assembly and the front fender through the radiator and the hot air is directed downstream of the radiator fan in straight horizontal paths. Due to presence of side panels, the hot air cannot be effectively dissipated in surrounding regions and is constrained to take a straight path and emerges between in the gap between the side panel and the frame assembly close to the vehicle central portion. This region is occupied by a rider 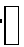 s legs when he is straddled and operating the two wheeled vehicle. Hence, there is a tendency for the hot air to impinge the legs of the rider and cause discomfort and injury to the legs on either side. This is extremely undesirable and care must be taken to prevent the hot air from being directed towards the rider 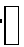 s legs. Further, the hot air always tends to remain in circulation within the two side panels and thus heating up the IC engine parts, especially the oil filter which is disposed forwardly to the IC engine and exposed to the flow of hot air.

An air deflecting structure can be used to guide the hot air away from the rider 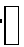 s legs regions. But, while directing the air there is always a problem of lesser distance between the air deflecting structure and the radiator fan. An optimum distance between the radiator fan and the air deflecting structure is necessary for proper functioning. Very close positioning of the air deflecting structure towards the fan will cause increased vibrations and increased noise due to air impinging the air deflecting structure. Very far positioning will cause air to leak out. Furthermore, the direction of air flow from the radiator fan to vehicle bottom is very crucial, as it helps give smooth turbulent free flows with less vibration and noise. In this process care also must be taken to prevent the contact of hot air to any of the IC engine components, especially when the air filter disposed forwardly and in close proximity to the radiator fan.
In the known art, see for example United States Patent Application number US20130168039A1. In this specification a triangular-shaped shroud attached to a radiator having a ram air passage region. The core of the radiator is not entirely covered with the shroud. More specifically, the ram air passage region through which the ram air passes easily is provided outside of the shroud in the flow direction of the ram air. However, the shroud is configured to cover a portion of the radiator only and not extending till the bottom-most region of the engine. Therefore, at high speed, the air outflows from the region above an engine E and regions at the right and left sides of the engine E thereby the hot air can impinge the legs of the rider and cause discomfort and injury to the legs on either side. above and from both lateral sides, being open in a downward direction.

Due to above drawbacks, the present subject matter provides an air deflecting structure attached to the IC engine to angularly direct the air thrown downstream by the radiator fan away from the rear portion of the side body panel towards the bottom of the two wheeled vehicle, and said air deflecting structure disposed in close proximity to the IC engine. This helps obtain an optimum space between the radiator fan and air deflecting structure such that, it is neither separated by a large distance or too short a distance. The air deflecting structure is disposed in close proximity to the IC engine and angularly oriented and directs the hot air downwards and then rearwards below the foot-pedal of the two wheeled vehicle with the aid of bottom fairings. This eliminates the contact of hot air with the IC engine parts and also the angular orientation provides a smooth turbulent free path downwards. Further, the hot air exit of the bottom fairing is designed to provide effective hot air discharge to prevent hot air re-entry into the air deflecting structure and also to prevent the increase in temperature of the cabin of the two wheeled vehicle.

With the above design changes, the hot air discharge can be prevented from impinging a rider's legs, and prevent the increase in temperature around the leg space area. The proposed changes are simple in construction and easy to remove and mount giving rise to improved serviceability.

The present subject matter along with all the accompanying embodiments and their other advantages would be described in greater detail in conjunction with the figures in the following paragraphs.

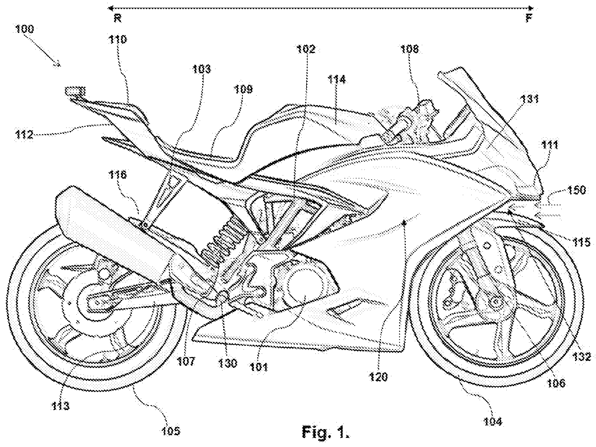

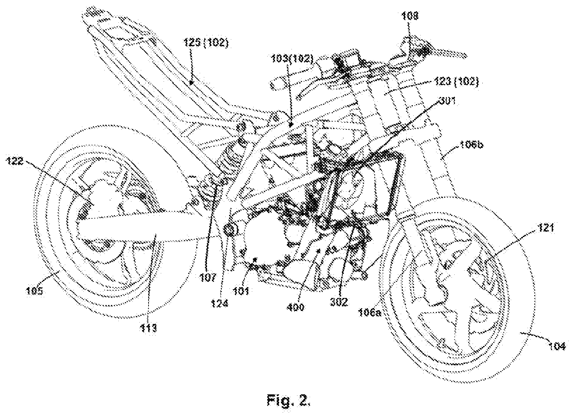

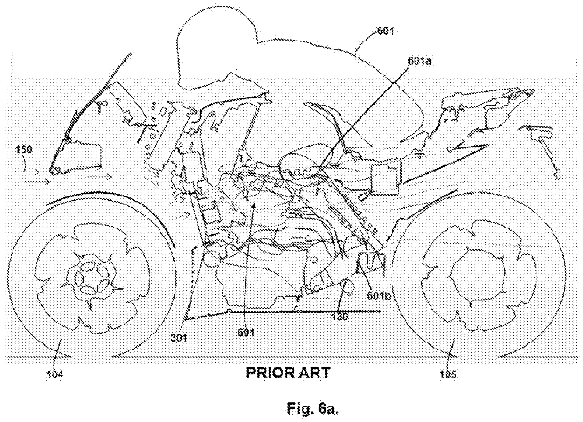

**Fig. 1** illustrates a side view of a two wheeled straddle type vehicle, for example, a motorcycle according to an embodiment. **Fig. 2****.** illustrates the isometric view of the two wheeled vehicle with a side panel **(120)** and other outer body members of the two wheeled vehicle which are removed according to the embodiment of the present subject matter. The two wheeled vehicle **(100)** according to an embodiment extends from the front portion **(F)** to the rear portion **(R)** and is supported by a frame assembly **(102).** In the present embodiment, the frame assembly is a trellis type frame, and comprises a head tube **(123),** a main frame portion **(103),** a down frame portion **(124),** and a rear frame portion **(125-shown in** **Fig. 2****).** All the portions of the frame assembly **(102)** are made of light weight metal alloy tubes joined together in a triangular form to reinforce and support the vehicular components. The two wheeled vehicle **(100)** includes a front wheel **(104)** steered by a handlebar **(108)** and a rear wheel **(105)** supported by a swing arm **(113).** Steering assembly parts including the visor assembly **(111),** the handlebar **(108)** and the front wheel **(104)** are supported for pivotal steering operation on the head tube **(123)** at the front end of the vehicle body frame **(102).** A rider seat **(109)** for a rider and a seat for a pillion rider **(110)** are placed rearward to a fuel tank **(114).** The IC engine **(101)** is disposed below the fuel tank **(114)** on the front portion of the two wheeled vehicle. A front fender **(115)** is provided above the front wheel **(104)** to avoid the vehicle occupants from being splashed with mud. Likewise, a rear fender **(116)** is placed above the rear wheel **(105),** and to the outer side in the radial direction of rear wheel **(105).** The rear fender **(116)** inhibits rainwater or the like from being thrown up by rear wheel **(105).** The swing arm **(113)** along with a rear suspension assembly **(107)** is supported at a rear portion **(R)** thereof for pivotal motion by the frame assembly **(102).** A front suspension assembly **(106)** includes a pair of front forks **(106a** and **106b)** for providing better ride comfort to the rider **(601- shown in** **Fig. 6a****).** In general terms, both the front suspension **(106)** and rear suspension **(107)** act as shock absorbers and help cushion the vehicle on uneven roads. The two wheeled vehicle **(100)** further comprises of a headlamp **(111),** a tail lamp assembly **(112)** and at least two turn signal lamps.

The two wheeled vehicle comprises two large side panels **(120)** (only one shown) disposed on either side enclosing the sides of the front portion **(F)** of the two wheeled vehicle **(100).** The side panel **(120)** extends from the visor assembly **(131)** on the upper region till the IC engine **(101)** on the lower region almost enclosing the all components supported by the main frame portion **(103)** of the two wheeled vehicle **(101).** **Fig. 2****.** further illustrates a radiator **(302)** disposed in the front portion of the two wheeled vehicle when the side panel **(120)** is removed. The radiator **(302)** functions to exchange heat of flowing coolant with the flowing air and forms part of the engine coolant cooling system. A radiator fan **(301)** is disposed towards the rear of the radiator **(302)** and on operation draws air from the atmosphere through the radiator **(302)** thus extracting heat from it. The air is drawn from a small inlet opening **(132)** below the headlamp assembly **(111)** and above the front fender **(115).** The air being drawn inside passes through the radiator **(302)** and flows downstream of the radiator fan **(301)** wherein an air deflecting structure **(400)** is disposed. The radiator **(301)** is mounted to the frame assembly with aid of radiator bosses **(302c)** disposed on the upper part of the radiator **(301)** and mounted on the IC engine **(101)** on its bottom part of the radiator **(301).**

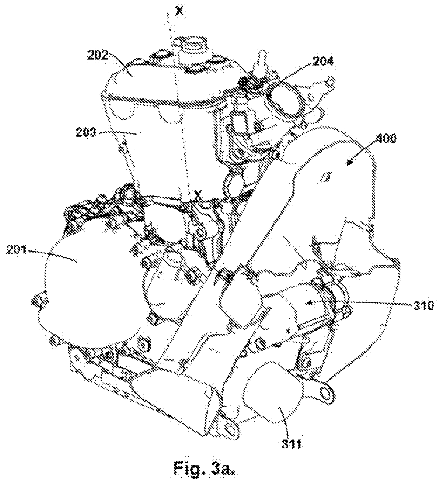

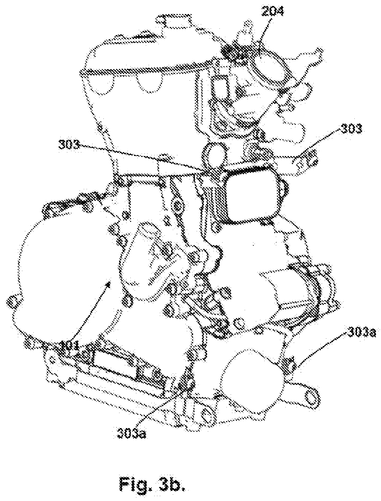

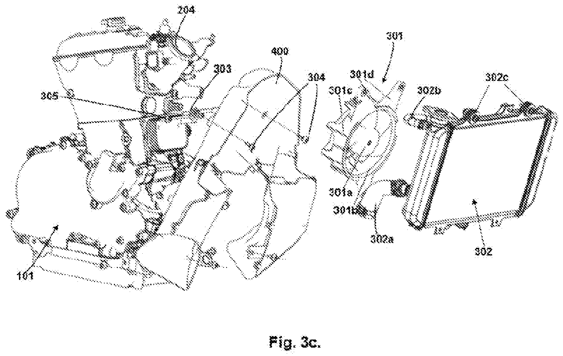

**Fig. 3a****.** illustrates the isometric view of the IC engine along with a deflector mounted on it. **Fig. 3b****.** illustrates the isometric view of the IC engine showing the brackets on which the air deflecting structure is mounted. **Fig. 3c****.** illustrates the exploded view of the air deflecting structure **(400)** mounted on the IC engine **(101)** according to the embodiment of the present subject matter. The IC engine **(101)** is reversely inclined, having a cylinder axis **(X-X)** forming an obtuse angle with a horizontal plane as seen from the front of the two wheeled vehicle. The IC engine **(101)** is made up of a cylinder head (not shown), cylinder block (not shown) and crankcase **(201).** A forced air cooling system is disposed on the crankcase (on the left-hand side) and is capable of drawing atmospheric air inside and circulated. The radiator fan **(301)** is designed to be of centrifugal type and comprises a central hub **(301a),** plurality of twisted vanes **(301b)** attached radially and equidistant to the central hub **(301a)** and an outer frame **(301c)** on which the central hub **(301a)** along with the plurality of twisted guide vanes (**301b**) are attached. The outer frame **(301c)** has plurality of vertically projecting bosses **(301d)** disposed on its outer periphery which is used to mount the radiator fan **(301)** on corresponding bosses **(302c)** on the radiator **(302)** by using fastening means like fasteners. The radiator is further connected to the frame assembly through the radiator bosses **(302c).** The radiator fan **(301)** then directs the air through the radiator to extract heat and forces the hot air out downstream of the radiator fan **(301).** The air deflecting structure **(400)** is obliquely disposed at a predetermined angle in a space defined between the radiator fan **(301)** and the IC engine **(101).** The angle of orientation varies in the range 10°to 20°. The air deflecting structure **(400)** including a top edge **(402a)** and a bottom edge **(402b),** and wherein the top edge **(402a)** is closer to the front of the two wheeled vehicle than the bottom edge **(402b).** The IC engine **(101)** comprises at-least one upper bracket **(303),** and one of the upper brackets **(303)** is configured to support the air deflecting structure **(400)** by attachment of fasteners **(304)** on the upper region of the air deflecting structure **(400).** Further, each of the two air directing portions **(404** and **405)** comprises a pair of projecting bosses **(406a** and **406b)** which is used to mount the air deflecting structure **(400)** on the bottom portion of the IC engine **(101).** The bottom portion of the IC engine **(101)** comprises at-least a pair of lower brackets **(303a)** which receives the projecting bosses **(406a** and **406b)** and secured by means of fasteners. As illustrated in the present embodiment, the air deflecting structure **(400)** is secured to the IC engine **(101),** hence any vibration effect from the radiator fan **(301)** is not transferred to the air deflecting structure **(400).** The gap between the radiator fan **(301)** and the fan enclosure portion **(401)** forming a central part of the air deflecting structure **(400)** lies between 5 millimeters to 10 millimeters. In present embodiment, one of the upper brackets **(303)** and the pair of lower brackets **(303a)** are disposed on the IC engine **(101),** to secure one air deflecting structure **(400).** Further, in other possible embodiments, more than one upper bracket **(303)** and more than one pair of lower brackets **(303a)** are disposed on the IC engine **(101),** to secure more than one air deflecting structure **(400).**

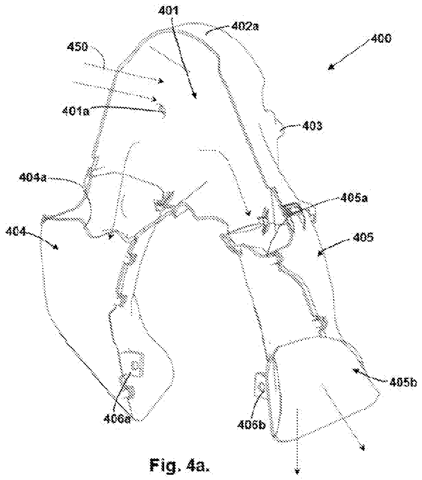

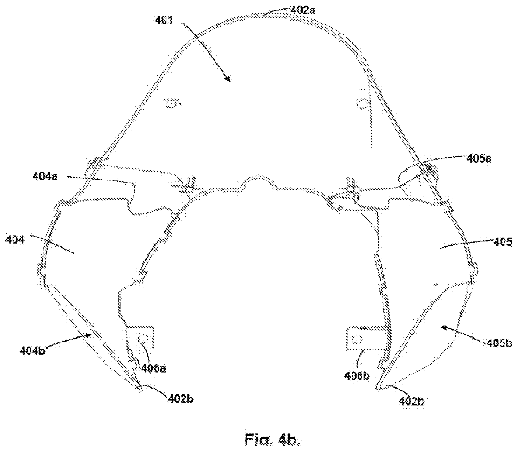

**Fig. 4a****.** and **Fig. 4b****.** illustrates the isometric view and the front view of the air deflecting structure **(400)** according to the embodiment of the present subject matter. The air deflecting structure **(400)** comprises a fan enclosure portion **(401)** forming a central part of the air deflecting structure **(400),** and two branching out air directing portions **(404** and **405)** disposed below the fan enclosure portion **(401)** and forming the two arms of the air deflecting structure **(400).** The fan enclosure portion **(401)** has a circumferential profile similar to the radiator fan **(301)** to accommodate at least a portion of the radiator fan **(301).** The two air directing portions **(404** and **405)** provides an air path (see **404a** and **405a)** to direct the air flow towards the bottom of the two wheeled vehicle on either side. The air paths **(see 404a and 405a)** is designed for providing optimum flow rate of hot air and ensure effective streamlined flow. The bottom of each of the two air directing portions **(404** and **405)** comprises an air outlet **(404b** and **405b)** to permit the egress of the hot air outside the air deflecting structure **(400).** Hence, when the air flow **(450)** is forced downstream by the radiator fan **(301)** at elevated temperature, this air flow encounters the fan enclosure portion **(401).** The fan enclosure portion **(401)** is concavely curved towards the inner profile such that, it is directed towards the two air directing portions **(404** and **405)** at the bottom portion of the air deflecting structure **(400).** In one embodiment, the air deflecting structure **(400)** is made of a resin material. Further, in present embodiment, the air deflecting structure **(400)** is substantially V-shaped. Furthermore, in other possible embodiments, the air deflecting structure **(400)** is of different shape as per the requirement of the particular vehicle.

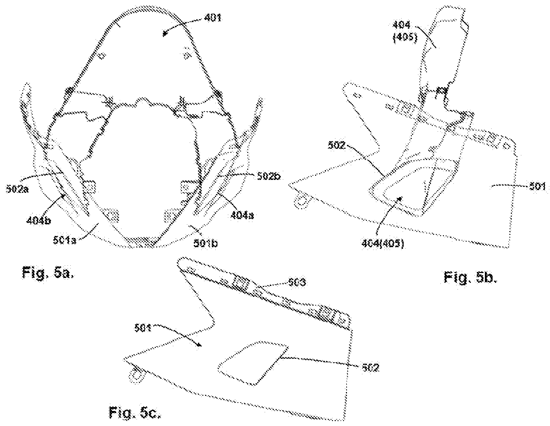

**Fig. 5a, Fig. 5b. and Fig. 5c****.** illustrates the front view, the side view, and the isometric view of the bottom fairing **(501)** according to the embodiment of the present subject matter. The bottom fairing **(501)** disposed on the bottom part in the front portion of the two wheeled vehicle **(100)** on either side in close vicinity of the IC engine **(101).** The bottom fairing **(501)** comprises an opening **(502),** and said outlet opening **(502)** configured to receive the air outlet **(404b** and **405b)** of the air deflecting structure **(400).** The bottom fairing **(501)** has an aerodynamic curved profile and directs the air obliquely in a side-downward direction towards the bottom of the two wheeled vehicle. This ensures air flow is below the footrest **(130)** and the feet of the rider **(601b).** The opening **(502)** has a profile that is quadrilateral in shape and having its two front edges curved and is sufficiently large and flat to vent out the hot air outside the atmosphere and prevent any hot air from re-entering back inside.

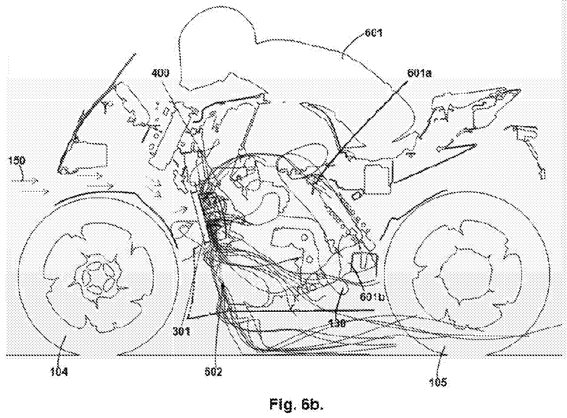

**Fig. 6a** illustrates the two wheeled vehicle of previous state of art without the use of air deflecting structure **(400).** Here, the hot air is forced in horizontal paths downstream by the radiator fan **(301).** This hot air is further directed by the side panels on both side and escape through the gape between the side panel and the frame assembly in close proximity to the zone around a rider's legs **(601a).** The hot air impinges on the rider's legs **(601a)** including the rider's knee, thigh, shin and foot. As highlighted, this causes severe discomfort to the rider **(601)** and sometimes even may result in burn injuries. This is more profound when the two wheeled vehicle is traveling at higher speeds. **Fig. 6b** illustrates the two wheeled vehicle employing air deflecting structure **(400).** Here, due to the presence of the air deflecting structure **(400),** the hot air is directed towards the obliquely towards bottom of the two wheeled vehicle **(100)** as seen in **Fig. 6b****.** The air deflecting structure **(400)** directs the air below the foot level of the rider **(601)** to prevent the hot air from even impinging the rider's foot **(601b).** The bottom fairing **(501)** further ensures it is directed angularly away from the rider's foot **(601b).**

Many modifications and variations of the present subject matter are possible in the light of above disclosure. Therefore, within the scope of claims of the present subject matter, the present disclosure may be practiced other than as specifically described.

## Claims

1. A two wheeled vehicle (100) comprising:
a frame assembly (102), extending from a front portion (F) to a rear portion (R) along a longitudinal axis (F-R);
a radiator (302) disposed on the front portion (F);
an internal combustion (IC) engine (101) mounted to the front portion (F) of the frame assembly (102) rearward of the radiator (302);
a radiator fan (301) interposed between the radiator (302) and the IC engine (101), said radiator fan configured to draw cooling air through the radiator (302);
a side body panel (120) disposed on the left hand and right hand side of the two wheeled vehicle and covering the radiator (302), the radiator fan (301) and at least a portion of the IC engine (101); and
wherein,
an air deflecting structure (400) disposed obliquely between the radiator fan (301) and the IC engine (101) substantially in proximity to the IC engine (101), said air deflecting structure (400) being configured to direct the air thrown downstream by the radiator fan (301) away from the rear portion of the side body panel (120) towards the bottom of the two wheeled vehicle (100), **characterized in that** the two wheeled vehicle (100) comprises a bottom fairing (501) disposed on both ends of the air directing portions (404 and 405) to direct the air obliquely in a side- downward direction towards the bottom of the two wheeled vehicle (100).

2. The two wheeled vehicle (100) as claimed in claim 1, wherein said air deflecting structure (400) is substantially V-shaped.

3. The two wheeled vehicle (100) as claimed in claim 1, wherein the bottom fairing (501) comprises an opening (502).

4. The two wheeled vehicle (100) as claimed in claim 3, wherein the opening (502) configured to receive an air outlet (404b and 405b) of the air deflecting structure (400).

5. The two wheeled vehicle (100) as claimed in claim 1, wherein the IC engine (101) comprises at-least one upper bracket (303) and at-least a pair of lower brackets (303a) to secure at-least one of the air deflecting structure (400), said upper bracket (303) configured to secure a fan enclosure portion (401), and said pair of lower brackets (303a) configured to secure the pair of air directing portions (404 and 405).

6. The two wheeled vehicle (100) as claimed in claim 1 or claim 5, wherein the pair of air directing portions (404 and 405) comprises a pair of projecting bosses (406a and 406b).

7. The two wheeled vehicle (100) as claimed in claim 1 or claim 6, wherein the pair of projecting bosses (406a and 406b) use to mount the air deflecting structure (400) on the IC engine (101).

8. The two wheeled vehicle (100) as claimed in claim 1, wherein gap between the radiator fan (301) and the fan enclosure portion (401) forming a central part of the air deflecting structure (400) lies between 5 millimeters to 10 millimeters.

9. The two wheeled vehicle (100) as claimed in claim 1, wherein angle of orientation for the air deflecting structure (400) between the radiator fan (301) and the IC engine (101) varies in a range of 10°to 20°.

10. A two wheeled vehicle (100) as claimed in claim 1, said air deflecting structure (400) comprising:
a fan enclosure portion (401) forming a central part; and
a pair of air directing portions (404 and 405) extending divergently from the fan enclosure portion (401), said pair of air directing portions (404 and 405) providing an air path (404a and 405a) to direct air flow towards the bottom of the two wheeled vehicle (100),
wherein bottom pair of air directing portions (404 and 405) comprises an air outlet (404b and 405b) to permit the egress of the hot air outside the air deflecting structure (400).

## Patentansprüche

1. Zweiradfahrzeug (100) mit:
einer Rahmenanordnung (102), die sich von einem vorderen Abschnitt (F) zu einem hinteren Abschnitt (R) entlang einer Längsachse (F-R) erstreckt;
einem Kühler (302), der an dem vorderen Abschnitt (F) angeordnet ist;
einem Verbrennungsmotor (101), der an dem vorderen Abschnitt (F) der Rahmenanordnung (102) hinter dem Kühler (302) angebracht ist;
einem Kühlerlüfter (301), der zwischen dem Kühler (302) und dem Verbrennungsmotor (101) angeordnet ist (101) angeordnet ist, wobei der Kühlerlüfter so konfiguriert ist, dass er Kühlluft durch den Kühler (302) ansaugt;
einer seitlichen Karosserieverkleidung (120), die auf der linken und rechten Seite des zweirädrigen Fahrzeugs angeordnet ist und den Kühler (302), den Kühlerlüfter (301) und mindestens einen Teil des Verbrennungsmotors (101) abdeckt; und
wobei,
eine Luftablenkungsstruktur (400), die schräg zwischen dem Kühlerlüfter (301) und dem Verbrennungsmotor (101) im Wesentlichen in der Nähe des Verbrennungsmotors (101) angeordnet ist, wobei die Luftablenkungsstruktur (400) so konfiguriert ist, dass sie die von dem Kühlerlüfter (301) stromabwärts geschleuderte Luft von dem hinteren Abschnitt des seitlichen Karosserieblechs (120) weg in Richtung des Bodens des Zweiradfahrzeugs (100) leitet, **dadurch gekennzeichnet, dass** das Zweiradfahrzeug (100) eine Bodenverkleidung (501) umfasst, die an beiden Enden der Luftlenkungsabschnitte (404 und 405) angeordnet ist, um die Luft schräg in einer seitlichen Abwärtsrichtung zum Boden des Zweiradfahrzeugs (100) zu lenken.

2. Zweiradfahrzeug (100) nach Anspruch 1, wobei die Luftumlenkungsstruktur (400) im Wesentlichen V-förmig ist.

3. Zweiradfahrzeug (100) nach Anspruch 1 , wobei die Bodenverkleidung (501) eine Öffnung (502) aufweist.

4. Zweiradfahrzeug (100) nach Anspruch 3, wobei die Öffnung (502) so konfiguriert ist, dass sie einen Luftauslass (404b und 405b) der Luftumlenkungsstruktur (400) aufnimmt.

5. Zweiradfahrzeug (100) nach Anspruch 1, wobei der Verbrennungsmotor (101) mindestens eine obere Halterung (303) und mindestens ein Paar unterer Halterungen (303a) umfasst, um mindestens eine der Luftumlenkungsstruktur (400) zu befestigen, wobei die obere Halterung (303) so konfiguriert ist, dass sie einen Gebläsegehäuseabschnitt (401) befestigt, und wobei das Paar unterer Halterungen (303a) so konfiguriert ist, dass es das Paar von Luftleitabschnitten (404 und 405) befestigt.

6. Zweiradfahrzeug (100) nach Anspruch 1 oder Anspruch 5, wobei das Paar von Luftführungsabschnitten (404 und 405) ein Paar von vorstehenden Vorsprüngen (406a und 406b) umfasst.

7. Zweiradfahrzeug (100) nach Anspruch 1 oder Anspruch 6, wobei das Paar vorstehender Vorsprünge (406a und 406b) zur Befestigung der Luftumlenkungsstruktur (400) am Verbrennungsmotor (101) dient.

8. Zweiradfahrzeug (100) nach Anspruch 1, wobei der Abstand zwischen dem Kühlerlüfter (301) und dem Lüftergehäuseabschnitt (401), der einen zentralen Teil der Luftumlenkungsstruktur (400) bildet, zwischen 5 Millimetern und 10 Millimetern liegt.

9. Zweiradfahrzeug (100) nach Anspruch 1, wobei der Ausrichtungswinkel für die Luftumlenkstruktur (400) zwischen dem Kühlerlüfter (301) und dem Verbrennungsmotor (101) in einem Bereich von 10° bis 20° variiert.

10. Zweiradfahrzeug (100) nach Anspruch 1, wobei die Luftumlenkungsstruktur (400) umfasst:
einen Gebläsegehäuseabschnitt (401), der einen zentralen Teil bildet; und ein Paar von Luftlenkungsabschnitten (404 und 405), die sich divergent von dem Gebläsegehäuseabschnitt (401) erstrecken, wobei das Paar von Luftlenkungsabschnitten (404 und 405) einen Luftpfad (404a und 405a) bereitstellt, um den Luftstrom in Richtung des Bodens des zweirädrigen Fahrzeugs (100) zu lenken,
wobei das untere Paar von Luftführungsabschnitten (404 und 405) einen Luftauslass (404b und 405b) umfasst, um den Austritt der heißen Luft aus der Luftumlenkungsstruktur (400) zu ermöglichen.

## Revendications

1. Véhicule à deux roues (100) comprenant :
un cadre (102) s'étendant d'une partie avant (F) à une partie arrière (R) le long d'un axe longitudinal (F-R) ;
un radiateur (302) disposé sur la partie avant (F) ;
un moteur à combustion interne (101) monté sur la partie avant (F) du châssis (102) à l'arrière du radiateur (302) ;
un ventilateur de radiateur (301) interposé entre le radiateur (302) et le moteur à combustion interne (101), ledit ventilateur de radiateur étant configuré pour aspirer l'air de refroidissement à travers le radiateur (302) ;
un panneau de carrosserie latéral (120) disposé sur les côtés gauche et droit du véhicule à deux roues et couvrant le radiateur (302), le ventilateur de radiateur (301) et au moins une partie du moteur à combustion interne (101) ; et
dans lequel,
une structure de déviation de l'air (400) disposée obliquement entre le ventilateur du radiateur (301) et le moteur à combustion interne (101), sensiblement à proximité du moteur à combustion interne (101), ladite structure de déviation de l'air (400) étant configurée pour diriger l'air projeté en aval par le ventilateur du radiateur (301) loin de la partie arrière du panneau latéral de la carrosserie (120) vers le bas du véhicule à deux roues (100), **caractérisé par le fait que** le véhicule à deux roues (100) comprend un carénage inférieur (501) disposé aux deux extrémités des parties de direction de l'air (404 et 405) pour diriger l'air obliquement dans une direction latérale vers le bas en direction du bas du véhicule à deux roues (100).

2. Véhicule à deux roues (100) selon la revendication 1, dans lequel la structure déflectrice d'air (400) est sensiblement en forme de V.

3. Véhicule à deux roues (100) selon la revendication 1, dans lequel le carénage inférieur (501) comprend une ouverture (502).

4. Véhicule à deux roues (100) selon la revendication 3, dans lequel l'ouverture (502) est configurée pour recevoir une sortie d'air (404b et 405b) de la structure de déflexion d'air (400).

5. Véhicule à deux roues (100) selon la revendication 1, dans lequel le moteur à combustion interne (101) comprend au moins un support supérieur (303) et au moins une paire de supports inférieurs (303a) pour fixer au moins l'une des structures de déviation d'air (400), ledit support supérieur (303) configuré pour fixer une partie d'enceinte de ventilateur (401), et ladite paire de supports inférieurs (303a) configurés pour fixer la paire de parties de direction d'air (404 et 405).

6. Véhicule à deux roues (100) selon la revendication 1 ou la revendication 5, dans lequel la paire de parties de direction de l'air (404 et 405) comprend une paire de bossages en saillie (406a et 406b).

7. Véhicule à deux roues (100) selon la revendication 1 ou la revendication 6, dans lequel la paire de bossages en saillie (406a et 406b) sert à monter la structure de déviation d'air (400) sur le moteur à combustion interne (101).

8. Véhicule à deux roues (100) selon la revendication 1, dans lequel l'écart entre le ventilateur de radiateur (301) et la partie de l'enceinte du ventilateur (401) formant une partie centrale de la structure déflectrice d'air (400) est compris entre 5 millimètres et 10 millimètres.

9. Véhicule à deux roues (100) selon la revendication 1, dans lequel l'angle d'orientation de la structure déflectrice d'air (400) entre le ventilateur du radiateur (301) et le moteur à combustion interne (101) varie entre 10° et 20°.

10. Véhicule à deux roues (100) selon la revendication 1, ladite structure déflectrice d'air (400) comprenant :
une partie d'enceinte de ventilateur (401) formant une partie centrale ; et une paire de parties de direction d'air (404 et 405) s'étendant de manière divergente à partir de la partie d'enceinte de ventilateur (401), ladite paire de parties de direction d'air (404 et 405) fournissant un chemin d'air (404a et 405a) pour diriger le flux d'air vers le bas du véhicule à deux roues (100),
la paire de parties inférieures de direction de l'air (404 et 405) comprend une sortie d'air (404b et 405b) pour permettre l'évacuation de l'air chaud à l'extérieur de la structure de déviation de l'air (400).
